# EUROPÄISCHE PATENTSCHRIFT

(11) **EP 2 307 859 B1**
(45) Veröffentlichungstag und Bekanntmachung des Hinweises auf die Patenterteilung: **24.06.2015**
(21) Anmeldenummer: 09781089.9
(22) Anmeldetag: 27.07.2009
(51) Int. Cl.: G01F 1/58, G01F 15/14

(54) **MAGNETISCH-INDUKTIVES DURCHFLUSSMESSGERÄT MIT EINER ELEKTRODENANORDNUNG UND VERFAHREN ZU DESSEN FERTIGUNG**
ELECTROMAGNETIC FLOWMETER WITH ELECTRODE ARRANGEMENT AND METHOD FOR ITS PRODUCTION
DÉBITMÈTRE MAGNÉTO-INDUCTIF AVEC AGENCEMENT D'ÉLECTRODES ET PROCÉDÉ POUR SA FABRICATION

(30) Priorität: 08.08.2008 DE 102008036962
(43) Veröffentlichungstag der Anmeldung: 13.04.2011
(73) Patentinhaber: Endress+Hauser Flowtec AG, 4153 Reinach (CH)
(72) Erfinder: KERROM, Roger, 79540 Lörrach (DE); TSCHUDIN, Beat, CH-4153 Reinach (CH); HESS, Raphael, CH-4203 Grellingen (CH)
(74) Vertreter: Andres, Angelika Maria
(86) Internationale Anmeldenummer: PCT/EP2009/059624
(87) Internationale Veröffentlichungsnummer: WO 2010/015534

(56) Entgegenhaltungen:
- EP-A2- 0 762 084
- JP-A- 56 164 917
- JP-A- 59 168 323
- US-A- 4 388 834

## Beschreibung

Die Erfindung bezieht sich auf ein magnetisch-induktives Durchflussmessgerät mit einem Messaufnehmer, wobei der Messaufnehmer ein von einem Messstoff durchströmbares Messrohr umfasst, ein Magnetsystem zur Erzeugung eines Magnetfeldes umfasst, und mindestens eine in das Messrohr eingebrachte Elektrode zum Erfassen einer elektrischen Spannung aufweist. Weiterhin bezieht sich die Erfindung auf ein Verfahren zur Fertigung eines magnetisch-induktiven Durchflussmessgerätes, wobei das magnetisch-induktive Durchflussmessgerät ein Messrohr aufweist, wobei das Messrohr wenigstens eine Bohrung aufweist, wobei eine Elektrode in die Bohrung eingebracht wird.

Magnetisch-induktive Durchflussmessgeräte nutzen für die volumetrische Strömungsmessung das Prinzip der elektrodynamischen Induktion aus: Senkrecht zu einem Magnetfeld bewegte Ladungsträger des Mediums induzieren im gleichfalls im Wesentlichen senkrecht zur Durchflussrichtung des Mediums und senkrecht zur Richtung des Magnetfeldes angeordneten Elektroden eine Spannung. Die in den Elektroden induzierte Messspannung ist proportional zu der über den Querschnitt des Messrohres gemittelten Strömungsgeschwindigkeit des Mediums und somit zum Volumenstrom. Ist die Dichte des Mediums bekannt, lässt sich der Massestrom in der Rohrleitung bzw. dem Messrohr bestimmen. Die Messspannung wird üblicherweise über das Elektrodenpaar abgegriffen, das in dem Bereich des Messrohres angeordnet ist, in dem die maximale Magnetfeldstärke und folglich die maximale Messspannung zu erwarten ist. Die Elektroden sind üblicherweise galvanisch mit dem Medium gekoppelt; es sind jedoch auch magnetisch-induktive Durchflussmessgeräte mit berührungslos kapazitiv koppelnden Elektroden bekannt.

Das Messrohr kann dabei entweder aus einem elektrisch leitfähigen Material, z.B. Edelstahl, gefertigt sein, oder aus einem elektrisch isolierenden Material bestehen. Ist das Messrohr aus einem elektrisch leitfähigen Material gefertigt, so muss es in dem mit dem Medium in Kontakt kommenden Bereich mit einem Liner aus einem elektrisch isolierenden Material ausgekleidet sein. Der Liner besteht je nach Temperatur und Medium beispielsweise aus einem thermoplastischen, einem duroplastischen oder einem elastomeren Kunststoff. Es sind jedoch auch magnetisch-induktive Durchflussmessgeräte mit einer keramischen Auskleidung bekannt.

Eine Elektrode lässt sich im Wesentlichen in einen Elektrodenkopf, der zumindest teilweise mit einem Medium, welches das Messrohr durchströmt, in Kontakt kommt, und einen Elektrodenschaft, der fast vollständig in der Wandung des Messrohres eingebracht ist, unterteilen.

Die Elektroden sind neben dem Magnetsystem die zentralen Komponenten eines magnetisch-induktiven Durchflussmessgerätes. Bei der Ausgestaltung und Anordnung der Elektroden ist darauf zu achten, dass sie sich möglichst einfach in dem Messrohr montieren lassen und dass nachfolgend im Messbetrieb keine Dichtigkeitsprobleme auftreten; darüber hinaus sollen sich die Elektroden durch eine empfindliche und gleichzeitig störungsarme Messsignalerfassung auszeichnen.

Neben den Messelektroden, die zum Abgriff eines Messsignals dienen, werden oftmals zusätzliche Elektroden in Form von Bezugs- oder Erdungselektroden in das Messrohr eingebaut, die dazu dienen, ein elektrisches Referenzpotential zu messen oder teilgefüllte Messrohre zu erkennen.

Die Patentschrift US 4,279,166 zeigt eine Elektrodenanordnung eines magnetisch-induktiven Durchflussmessgerätes zum Abdichten eines Einsatzes in das Durchflussmessgerät. Die Abdichtung besteht dabei im Wesentlichen aus einer Gewindekappe, die auf ein Gewinde des Einsatzes aufgeschraubt wird und die Elektrode im Einsatz fixiert. Die Anordnung wird von einem unterhalb der Schulter der Elektrode angebrachten O-Ring abgedichtet.

Auch die Patentschrift US 5,224,394 zeigt eine Anordnung zur Abdichtung von in die Wandung eines keramischen Messrohrs eines magnetisch-induktiven Durchflussmessgerätes eingebrachten Elektroden. Dafür wird die Elektrode durch eine Feder in einer vorgesehenen Stellung gehalten, so dass die Elektrode das Messrohr abdichtet.

Die Patentschrift US 3,171,990 zeigt eine Anordnung zur Befestigung von Elektroden in einem Messrohr. Dabei wird die Elektrode in einen Einsatz in das Messrohr eingesetzt und mittels einer Überwurfmutter und einem Gewinde im Bereich des Elektrodenschafts in der Halterung fixiert.

Das Dokument JP 56-164917 A offenbart ein Verfahren zum Befestigen einer Elektrode eines magnetisch-induktiven Durchflussmessgerätes durch Schmelzen einer zwischen den Bund der Elektrode und dem Liner des Messrohrs eingebrachten Zwischenlage oder durch direktes Schmelzen des Liners im Bereich des Elektrodenbundes. Der Elektrodenbund wird somit durch eine Klebeverbindung am Messrohr befestigt.

J Diese Ausführungen haben jedoch den Nachteil, dass die radialen Bohrungen im Messrohr Schwachstellen bilden, die beim Durchströmen von unter hohem Druck stehenden Messstoffen zu Rissen und Zerstörungen führen. Weiterhin ist es bei kleinen Nennweiten von Messrohren schwierig, die Elektroden im Messrohr anzubringen und die Bohrung zu verschließen.

Zudem sind bei Messrohren aus Kunststoff die herkömmlichen, im Stand der Technik angewandten Befestigungsarten von Elektroden im Messrohr nicht praktikabel.

Der Erfindung liegt daher die Aufgabe zugrunde, ein magnetisch-induktives Durchflussmessgerät und ein Verfahren zur Fertigung eines magnetisch-induktiven Durchflussmessgerätes vorzuschlagen, bei dem die Elektrode im bzw. am Messrohr flüssigkeitsdicht befestigt ist.

Bezüglich des magnetisch-induktiven Durchflussmessgerätes wird die Aufgabe erfindungsgemäß dadurch gelöst, dass ein Befestigungsmittel vorgesehen ist, das zum Befestigen der Elektrode am Messrohr dient, dass das Befestigungsmittel wenigstens teilweise aus Kunststoff besteht, und dass das Befestigungsmittel durch eine Kunststoff-Schweißtechnik mit dem Messrohr verbunden ist. Durch die Kunststoff-Schweißtechnik wird vorzugsweise eine unlösbare, stoffschlüssige Verbindung erreicht. Schweißverbindungen weisen gegenüber anderen Verbindungen eine hohe Festigkeit der Verbindung auf. Beim Schweißen werden die Bauteile, Befestigungsmittel und Messrohr, in einer Fügezone unter Anwendung von Wärme und/oder Kraft lokal aufgeschmolzen und beim Erstarren der Schmelze unlösbar miteinander verbunden. Dies bietet den Vorteil, dass die Bohrung, in die die Elektrode eingesetzt ist, druck- und flüssigkeitsdicht verschlossen ist. Weiterhin wird dadurch ein Wackeln der Elektrode unter Betriebsbedingungen in der Bohrung unterbunden; d.h. die Elektrode ist spielfrei in der Bohrung befestigt. Dadurch werden Störungen im Messsignal u.a. das sog. Elektrodenrauschen vermindert.

In einer vorteilhaften Weiterbildung besteht das Messrohr wenigstens teilweise aus Kunststoff. Dadurch wird eine höhere Festigkeit der Schweißverbindung erreicht. Zudem ist Kunststoff im Vergleich zu Werkstoffen aus Metall preisgünstiger. Heutzutage weisen Kunststoffe versetzt mit geeigneten Verbundstoffen eine hohe Festigkeit und sowie eine hohe Korrosionsbeständigkeit auf.

Die Elektrode weist einen Bund auf, mit dem die Elektrode auf dem Messrohr aufliegt. Vorzugsweise verläuft der Bund radial zur Längsachse der Elektrode. Durch den Bund kann die Elektrode in einer vorgesehenen Stellung, vorzugsweise senkrecht zur Längsachse des Messrohrs, gehalten werden. Weiterhin ist die Elektrode durch den Bund nur so weit in die Wandung des Messrohrs einbringbar, bis der Bund auf dem Messrohr aufliegt. Dadurch wird bei der Montage ein Eindringen der Elektrode in den Lauf des Messrohrs vermieden und das Strömungsprofil des das Messrohr durchströmenden Messstoffs nicht beeinflusst.

In einer vorteilhaften Weiterbildung weist das Messrohr eine von einer Halterung umgebene Bohrung auf, wobei die Elektrode in die Bohrung eingebracht ist. Die Halterung ist bspw. Teil des Messrohrs oder ein in das Messrohr eingebrachter Einsatz. Die Halterung besteht bspw. aus einem kragenartigen Ansatz, der radial zur Längsachse des Messrohrs verläuft und vom Messrohr absteht.

In einer weiteren vorteilhaften Ausgestaltung besteht das Messrohr wenigstens im Bereich der Halterung aus Kunststoff. Durch die Verbindung zwischen Befestigungsmittel und Halterung entsteht so ein besonders festes Gefüge. Eine aus Kunststoff bestehende Halterung ermöglicht somit den Umbau eines metallischen Messrohrs, welches mit einem Liner ausgekleidet ist, zu einem erfindungsgemäßen magnetisch-induktiven Durchflussmessgerät.

In einer vorteilhaften Weiterbildung ist das Befestigungsmittel mit der Halterung verbunden. Durch das mit der Halterung mittels der Kunststoff-Schweißtechnik verbundene Befestigungsmittel ist die Elektrode am Messrohr fixiert und das Messrohr abgedichtet. Vorzugsweise ist die Elektrode im Bereich des Elektrodenschafts und/oder an dem von dem Elektrodenkopf abgewandten Ende von dem Befestigungsmittel umgeben.

Das Befestigungsmittel liegt wenigstens teilweise auf dem Bund der Elektrode auf. Als Befestigungsmittel ist bspw. eine Scheibe oder ein Ring vorgesehen, die auf den Bund aufgelegt sind. Durch den Druck des Befestigungsmittels auf den Bund der Elektrode wird die Elektrode in die Bohrung gepresst und in einer vorgesehen Stellung platziert.

In einer vorteilhaften Weiterbildung liegt der Bund der Elektrode wenigstens teilweise auf der Halterung auf. Durch die Kunststoff-Schweißtechnik lässt sich das Befestigungsmittel mit der Halterung verbinden und das Messrohr abdichten. Dadurch ist die Elektrode erkennbar in der für sie vorgesehenen Stellung eingebracht und bildet zudem eine zusätzliche Dichtstufe, die die Bohrung verschließt.

In einer vorteilhaften Weiterbildung handelt es sich bei der Kunststoff-Schweißtechnik um eine der folgenden Techniken: Ultraschall-, Widerstands-, Bolzen-, Laser-, Elektronenstrahl-, Reib- und/oder Heiz- Schweißtechnik. Die Wärmeerzeugung zur Herstellung der Verbindung erfolgt z. B. durch Heizelemente, Strom, Reibung, Laser- oder Elektronenstrahl. Mittels der Kunststoff-Schweißtechnik können insbesondere unlösbare stoffschlüssige Verbindungen zwischen Bauteilen aus thermoplastischen Kunststoffen hergestellt werden.

In einer vorteilhaften Weiterbildung ist das Befestigungsmittel so ausgestaltet, dass die Elektrode durch das Befestigungsmittel in einer vorgesehenen Stellung angeordnet ist. Das Befestigungsmittel besteht bspw. aus einer Kappe, die auf die Halterung aufgelegt ist und den Bund der Elektrode aufnimmt. Durch das an die Kontur der Elektrode mit ihrem Bund angepasste Befestigungsmittel wird eine passgenaue Auflage des Befestigungsmittels und damit eine allseitig flüssigkeits- und/oder druckdicht verschlossene Elektrodenanordnung des erfindungsgemäßen magnetisch-induktiven Durchflussmessgerätes erreicht.

In einer vorteilhaften Weiterbildung weist die Elektrode mindestens ein Dichtelement auf, das das Messrohr im Bereich der Bohrung abdichtet. Dafür wird das Dichtelement vorzugsweise in einem Bereich unterhalb des Bunds der Elektrode am Elektrodenschaft angebracht und verhindert so das Austreten des Messstoffs aus dem Messrohr.

In einer vorteilhaften Weiterbildung weist die Elektrode einen Elektrodenkopf und einen Elektrodenschaft auf und das Dichtelement ist teilweise in einer Ausnehmung des Elektrodenschafts eingebracht. Das Dichtelement verhindert das Austreten des Messstoffs aus dem Messrohr durch die Bohrung hindurch. Vorzugsweise ragt das Dichtelement über den Rand des Elektrodenschafts hinaus und dichtet einen zwischen der Bohrung und dem Elektrodenschaft vorhandenen Spalt ab.

Zusätzlich kann ein weiteres Dichtelement zwischen dem Befestigungsmittel und der Elektrode im Bereich des Bundes der Elektrode oberhalb der Halterung vorgesehen sein.

In einer weiteren vorteilhaften Ausgestaltung ist mindestens eine Schweißlippe und/oder eine Quetschnaht an dem Befestigungsmittel und/oder dem Messrohr vorgesehen, wobei die Schweißlippe und/oder die Quetschnaht dazu dienen, das Befestigungsmittel an dem Messrohr zu fixieren. Ggf. kann die Schweißlippe oder die Quetschnaht auch an der Halterung angebracht sein. Bei Schweißlippe und Quetschnaht handelt es sich um sog. Fügezonen. Die Fügezonen der Schweißverbindung sind besonders bei der Ultraschall-Schweißtechnik von ausschlaggebender Bedeutung für die Belastungsfähigkeit der Verbindung. Weiterhin dienen die Fügezonen bei der Ultraschall-Schweißtechnik als Energierichtungsgeber, durch die eine gezielte und konzentrierte Energieentladung erreicht wird. Die Quetschnaht kommt vorzugsweise zur Herstellung dichter und hochfester Schweißverbindungen zum Einsatz.

Bezüglich des Verfahrens wird die Aufgabe erfindungsgemäß dadurch gelöst, dass die Elektrode mittels einer Kunststoff-Schweißtechnik an dem Messrohr befestigt wird. Durch die Kunststoff-Schweißtechnik werden die Bauteile, Befestigungsmittel und Messrohr, stoffschlüssig miteinander verbunden. Vorzugsweise wird die Bohrung im Messrohr dadurch abgedichtet und die Elektrode in der Bohrung und am Messrohr fixiert. Dafür kann die Ultraschall-, Widerstands-, Bolzen-, Laser-, Elektronenstrahl-, Reib- und/oder Heiz-Schweißtechnik verwendet werden.

In einer vorteilhaften Weiterbildung wird die Elektrode durch eine am Messrohr vorgesehene Halterung in einer vorgesehen Stellung gehalten, weiterhin weist die Elektrode einen Bund auf, der auf die Halterung aufgelegt wird, wird ein Befestigungsmittel aus Kunststoff auf den Bund angelegt, wobei das Befestigungsmittel wenigstens teilweise auf der Halterung aufliegt, wird das Befestigungsmittel mittels der Kunststoff-Schweißtechnik mit dem Messrohr verbunden.

In einer Ausgestaltung des erfindungsgemäßen Verfahrens wird eine insbesondere zylindrische Elektrode mit einem Bund in eine vorgefertigte Bohrung im Messrohr eingebracht bis der Bund auf dem Messrohr oder der Halterung aufliegt. Ggf. wird über den Bund ein Befestigungsmittel aus Kunststoff geschoben, das speziell geformte Schweißlippen oder eine Quetschnaht aufweist. Daraufhin kann das Befestigungsmittel mit der Halterung oder dem Messrohr mittels Kunststoff-Schweißtechnik verbunden werden.

Zur Durchführung des Verfahrens können insbesondere Geräte zum Ultraschallschweißen eingesetzt werden. Die Ultraschallschweißgeräte werden zum stoffschlüssigen Fügen thermoplastischer Kunststoffe verwendet. Gemäß DIN 1910 Teil 3 gehört das Ultraschallschweißen von Kunststoffen zur Kategorie "Schweißen durch Bewegung" der Verfahrensgruppe Pressverbindungsschweißen. Das Aufschmelzen des Werkstoffs erfolgt dabei durch eine hochfrequente mechanische Schwingung von bis zu 40 kHz mittels Ultraschall. Auch Metalle können durch Ultraschallschweißen miteinander verbunden werden.

Beim Ultraschallschweißen wird durch einen Generator aus der Netzspannung eine elektrische Hochfrequenzspannung von bis zu 40 kHz für die Ansteuerung eines Konverters erzeugt. Überwiegend werden Piezoelektrische Wandler als Konverter eingesetzt. Der Konverter wandelt die elektrische Spannung in Körperschallwellen, welche von einem sog. Booster in ihrer akustischen Amplitude verändert und auf eine Sonotrode als eigentliches Schweißwerkzeug übertragen werden. Eine Pressen-Vorschubeinheit presst die Schwingeinheit mit der Sonotrode dabei gegen die Schweißstelle. Dadurch wird eine unter einem vorgegebenen Anpressdruck stehende longitudinale Schwingbewegung erzeugt, welche die Schweißstelle durch eine hochfrequente hammerartige Bearbeitung der Fügestelle aufschmilzt. Die Energieeinbringung in die Fügezone wird dabei durch so genannte Energierichtungsgeber sichergestellt. Dafür ist die Fügezone bspw. mit dachförmigen Schweißlippen versehen oder als Quetschnaht ausgestaltet.

Die Erfindung wird anhand der nachfolgenden Zeichnungen näher erläutert. Es zeigt:
Fig. 1: einen Querschnitt durch eine Elektrodenanordnung eines erfindungsgemäßen magnetisch-induktiven Durchflussmessgeräts,
Fig. 2: einen Querschnitt durch die Längsachse eines Messrohrs im Bereich der Messelektroden des erfindungsgemäßen magnetisch-induktiven Durchflussmessgeräts, und
Fig. 3: zwei schematische Darstellungen unterschiedlicher Fügezonen.

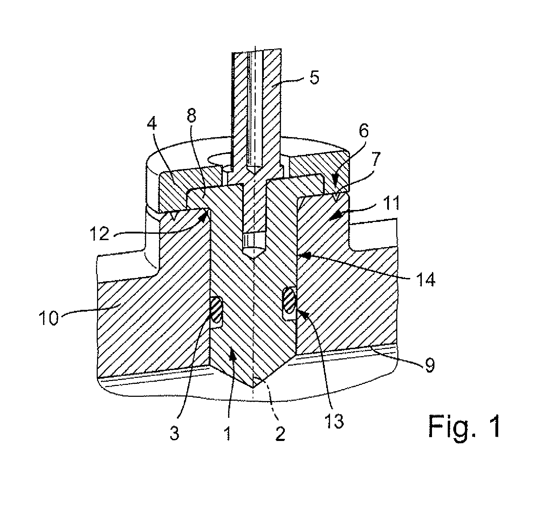

Figur 1 zeigt einen Querschnitt durch eine Elektrodenanordnung eines magnetisch-induktiven Durchflussmessgerätes. Die Elektrode 1 ist in eine Bohrung 14 in die Wandung eines Messohrs 10 eingebracht und weist einen Elektrodenschaft und einen im Messbetrieb vom Messstoff wenigstens teilweise benetzten Elektrodenkopf auf. Der Elektrodenkopf weist, in dem Bereich in dem er in den Lauf des Messrohrs hineinragt, eine konische Form auf. Im Bereich der Bohrung 14 weist der Elektrodenschaft eine zylindrische Grundform auf. Darüber hinaus ist im Bereich des Elektrodenschafts eine radiale Ausnehmung vorgesehen, die einen O-Ring 3 enthält. Der O-Ring 3 ragt geringfügig über den Rand des Elektrodenschafts hinaus, so dass er eine erste Dichtstufe bildet und die Elektrode 1 im Bereich der Bohrung 14 abdichtet. An dem vom Elektrodenkopf abgewandten Ende weist die Elektrode 1 einen Bund 8 auf, mit dem die Elektrode 1 abschließt. Der Bund 8 steht senkrecht von der Elektrodenlängsachse 2 ab. Entlang der Elektrodenlängsachse 2 weist die Elektrode 1 in dem vom Elektrodenkopf abgewandeten Ende eine Buchse auf, in die ein Stecker 5 eingebracht ist. Der Stecker 5 dient dabei zum Abgreifen des mittels des Elektrodenkopfs im Messstoffs gemessen elektrischen Potentials.

Die in das Messrohr 10 eingebrachte zylindrische Bohrung 14 ist von einer Halterung 11 in Form eines kragenartigen Ansatzes umgeben. Die Halterung 11 befindet sich auf der Außenseite des Messrohrs 10. Das Messrohr 10 besteht dabei wenigstens im Bereich der Bohrung 14 und der Halterung 11 aus Kunststoff. Der Elektrodenschaft ist vollständig in die Bohrung 14 eingebracht. Die Elektrode 1 liegt mit ihrem Bund 8 auf einer ebenen die Halterung 11 abschließenden Fläche auf. Die Auflagefläche des Bundes 8 verläuft senkrecht zur Elektrodenlängsachse 2 und parallel zur Längsachse des Messrohrs 10. Über den Bund 8 der Elektrode 1 ist eine Kappe 4 angebracht, die auf der Halterung 11 aufliegt. Die Kappe 4 ist durch ein Kunststoff-Schweißverfahren mit der Halterung 11 verbunden.

Weiterhin weist die Kappe 4 eine zentrale Öffnung entlang der Längsachse 2 der Elektrode auf, durch die die Elektrode 1 elektrisch durch einen Stecker 5 verbunden ist. Das dabei von der Elektrode 1 abgegriffene Potential wird an eine Mess- und/oder Betriebsschaltung - nicht explizit gezeigt - übermittelt. Aus dem elektrischen Potential wird eine dem Durchfluss proportionale Spannung abgeleitet und daraus der Durchfluss bestimmt.

Das Messrohr 10 ist wenigstens im Bereich der Elektroden 1 von einem Gehäuse - nicht explizit gezeigt - umgeben. Das vom Messstoff durchflossene, unter einem Prozessdruck stehende Messrohr 10 wird im Bereich des Elektrodenschafts durch eine erste Dichtungsstufe, bestehend aus einem radial angeordneten O-Ring 3, druck- und flüssigkeitsdicht verschlossen. Der O-Ring 3 weist die erforderlichen physikalischen und chemischen Eigenschaften auf, die für den Gebrauch in typischen Messstoffen wie z.B. Trink- und Abwasser notwendig sind. Weiterhin ist der O-Ring 3 speziell für einen Einsatz in Verbindung mit aus Kunststoff bestehenden Materialien ausgelegt.

Die Bohrung 14 vergrößert sich in ihrem Endbereich konisch, so dass eine Aussparung 12 zwischen der Elektrode 1 und der Bohrung 14 besteht. Diese Aussparung 12 liegt direkt unterhalb des Bunds 8 der Elektrode1. In der Aussparung 12 lässt sich ein zweites Dicht- bzw. Isolierelement, nicht gezeigt, einbringen.

Die auf Elektrode 1 und Halterung 11 aufgesetzte Kappe 4 weist entlang der Fügezone 6 auf der Halterung 11 eine Schweißlippe 7 auf. Die Schweißlippe 7 hat einen dachförmigen Querschnitt und wird mit der Halterung 11 stoffschlüssig verschmolzen. Dadurch ist die Bohrung 14 druck- und flüssigkeitsdicht abgedichtet.

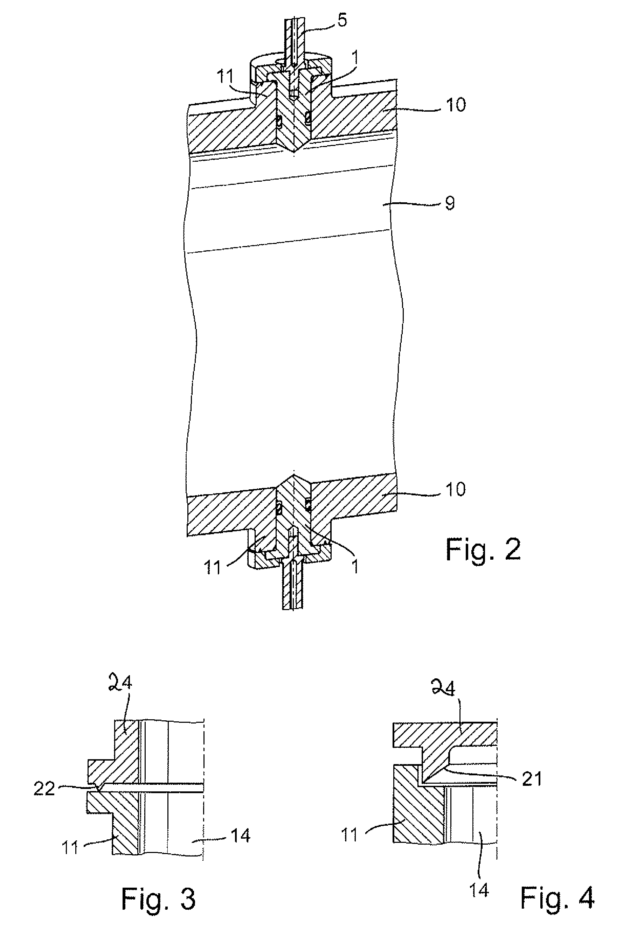

Figur 2 zeigt zwei diametral zur Längsachse in ein Messrohr 10 eingebrachte Messelektroden eines erfindungsgemäßen magnetisch-induktiven Durchflussmessgerätes. Die Elektroden 1 sind, wie in Figur 1 gezeigt, in das Messrohr 10 eingebracht. Bei dem erfindungsgemäßen magnetisch-induktiven Durchflussmessgerät und durch das Verfahren zu dessen Herstellung sind die Elektroden 1 dauerhaft senkrecht zur Längsachse des Messrohres 10 druck- und flüssigkeitsdicht eingebracht. Mittels Ultraschall-Schweißtechnik sind die Elektroden 1 von dem wenigstens im gezeigten Bereich aus Kunststoff bestehenden Messrohr 10 umgeben und im Bereich des Elektrodenschafts und im Bereich des vom Elektrodenkopf abgewandten Endes darin eingeschlossen. Lediglich der im Messbetrieb vom Messstoff benetzte Elektrodenkopf und der Stecker 5 zum Abgreifen des gemessenen elektrischen Potentials sind nicht in das Messrohr 10 eingebettet.

Figur 3 zeigt eine Schweißlippe 22. Die Schweißlippe 22 in Figur 3 hat einen dachförmigen Querschnitt. Durch das Schweißverfahren verschmilzt die Schweißlippe 22 im Bereich der Fügezone 6 der Halterung 11. Dadurch entsteht eine stoffschlüssige Verbindung zwischen dem Befestigungsmittel 24 und dem Messrohr 10.

Figur 4 zeigt eine sog. Quetschnaht 21. Die Quetschnaht 21 bildet eine Verbindung zwischen dem Befestigungsmittel 24 und der Halterung 11. Dafür weist die Bohrung 14 in ihrem Endbereich einen vergrößerten Radius auf, der in die Wandung des Messrohrs 10 bzw. der Halterung 11 hineinragt. Der durch den vergrößerten Radius entstandene Raum wird von einem Steg des Befestigungsmittels 24 ausgefüllt. Der Steg weist eine Schräge von ca. 30° zu einer Linie senkrecht zur Längsachse der Bohrung 14 auf. Durch die Kunststoff-Schweißtechnik wird der Steg stoffschlüssig mit der Halterung verbunden.

Die Schräge des Stegs im Falle der Quetschnaht und der dachförmige Querschnitt im Falle der Schweißlippe bilden Energierichtungsgeber, durch die eine unvorteilhafte Flächenverschweißung verhindert wird. Zudem wird dadurch die Schweißzeit verkürzt.

### Bezugszeichenliste

- 1: Elektrode
- 2: Elektrodenlängsachse
- 3: O-Ring
- 4: Kappe
- 5: Stecker
- 6: Fügezone
- 7: Schweißlippe
- 8: Bund
- 9: Messrohr-Innenseite
- 10: Messrohr
- 11: Halterung
- 12: Endbereich der Bohrung
- 13: Ausnehmung
- 14: Bohrung

- 21: Quetschnaht
- 22: Schweißlippe
- 24: Befestigungsmittel

## Patentansprüche

1. Magnetisch-induktives Durchflussmessgerät mit einem Messaufnehmer, wobei der Messaufnehmer
ein von einem Messstoff durchströmbares Messrohr (10) umfasst,
ein Magnetsystem zur Erzeugung eines Magnetfeldes umfasst, mindestens eine in das Messrohr (10) eingebrachte Elektrode (1) zum Erfassen einer elektrischen Spannung aufweist,
wobei ein Befestigungsmittel (4) vorgesehen ist, das zum Befestigen der Elektrode (1) am Messrohr (10) dient,
**dadurch gekennzeichnet,**
**dass** die Elektrode (1) einen Bund (8) aufweist, mit dem die Elektrode (1) auf dem Messrohr (10) auffliegt,
**dass** das Befestigungsmittel (4) wenigstens teilweise auf dem Bund (8) der Elektrode (1) aufliegt,
**dass** das Befestigungsmittel (4) wenigstens teilweise aus Kunststoff besteht,
und **dass** das Befestigungsmittel (4) durch eine Kunststoff-Schweißtechnik mit dem Messrohr (10) verbunden ist,
wobei die Elektrode (1) durch den Druck des Befestigungsmittels (4) auf den Bund (8) der Elektrode (1) in eine Bohrung (14), in die die Elektrode (1) eingesetzt ist, gepresst und in einer vorgesehen Stellung platziert wird.

2. Vorrichtung nach Anspruch 1,
**dadurch gekennzeichnet,**
**dass** das Messrohr (10) wenigstens teilweise aus Kunststoff besteht.

3. Vorrichtung nach einem der vorherigen Ansprüche,
**dadurch gekennzeichnet,**
**dass** das Messrohr eine von einer Halterung (11) umgebene Bohrung (14) aufweist,
wobei die Elektrode (1) in die Bohrung (14) eingebracht ist.

4. Vorrichtung nach Anspruch 3,
**dadurch gekennzeichnet,**
**dass** der Bund (8) der Elektrode (1) wenigstens teilweise auf der Halterung (11) aufliegt.

5. Vorrichtung nach wenigstens einem der Ansprüche 3 oder 4,
**dadurch gekennzeichnet,**
**dass** das Befestigungsmittel (4) mit der Halterung (11) verbunden ist.

6. Vorrichtung nach einem der vorherigen Ansprüche,
**dadurch gekennzeichnet,**
**dass** es sich bei der Kunststoff-Schweißtechnik um eine der folgenden Techniken handelt: Ultraschall-, Widerstands-, Bolzen-, Laser-, Elektronenstrahl-, Reib- und/oder Heiz- Schweißtechnik.

7. Vorrichtung nach einem der vorherigen Ansprüche,
**dadurch gekennzeichnet,**
**dass** das Befestigungsmittel (4)
so ausgestaltet ist, dass die Elektrode (1) durch das Befestigungsmittel (4) in einer vorgesehenen Stellung angeordnet ist.

8. Vorrichtung nach einem der vorherigen Ansprüche,
**dadurch gekennzeichnet,**
**dass** das Befestigungsmittel (4) aus einer Kappe (4) besteht, und dass die Kappe (4) auf die Halterung (11) aufgelegt ist und den Bund (8) der Elektrode (1) aufnimmt.

9. Vorrichtung nach dem vorherigen Anspruch ,
**dadurch gekennzeichnet,**
**dass** die Kappe (4) über dem Bund (8) der Elektrode (1) angebracht ist.

10. Vorrichtung nach einem der vorherigen Ansprüche,
**dadurch gekennzeichnet,**
**dass** die Elektrode (1) mindestens ein Dichtelement (3) aufweist, das das Messrohr (10) im Bereich der Bohrung (14) abdichtet.

11. Vorrichtung nach Anspruch 10,
**dadurch gekennzeichnet,**
**dass** die Elektrode (1)
einen Elektrodenkopf und einen Elektrodenschaft aufweist und dass das Dichtelement (3) teilweise in einer Ausnehmung (13) des Elektrodenschafts eingebracht ist.

12. Vorrichtung nach Anspruch 10,
**dadurch gekennzeichnet,**
**dass** mindestens eine Schweißlippe (7) und/oder eine Quetschnaht an dem Befestigungsmittel (4) und/oder dem Messrohr (10) vorgesehen ist,
wobei die Schweißlippe (7)
und/oder die Quetschnaht dazu dient, das Befestigungsmittel (4) an dem Messrohr (10) zu fixieren.

13. Verfahren zur Fertigung
eines magnetisch-induktiven Durchflussmessgerätes,
wobei das magnetisch-induktive Durchflussmessgerät ein Messrohr (10) aufweist,
wobei das Messrohr (10) wenigstens eine Bohrung (14) aufweist,
**dadurch gekennzeichnet,**
**dass** eine Halterung (11) am Messrohr (10) vorgesehen ist,
**dass** eine Elektrode (1) mit einem Bund (8) in die vorgefertigte Bohrung (14) im Messrohr (10) eingebracht wird, bis der Bund (8) auf dem Messrohr (10) oder der Halterung (11) aufliegt,
**dass** die Elektrode (1) durch die Halterung (11) Z in einer vorgesehen Stellung gehalten wird,
**dass** ein Befestigungsmittel (4) aus Kunststoff auf den Bund (8) angelegt wird, wobei
das Befestigungsmittel (4) wenigstens teilweise auf der Halterung (11) aufliegt, und dass das Befestigungsmittel (4) mittels einer Kunststoff-Schweißtechnik mit dem Messrohr (10) verbunden wird,
wobei die Elektrode (1)
durch den Druck des Befestigungsmittels (4) auf den Bund (8) der Elektrode (1) in die Bohrung (14) gepresst und in einer vorgesehen Stellung platziert wird, und
**dass** dadurch die Elektrode (1) an dem Messrohr (10) befestigt wird.

14. Verfahren nach Anspruch 13,
**dadurch gekennzeichnet,**
**dass** das Messrohr (10) eine Halterung (11) aufweist, durch die die Elektrode (1) in einer vorgesehen Stellung gehalten wird,
**dass** die Elektrode (1) einen Bund (8) aufweist, der auf die Halterung (11) aufgelegt wird,
**dass** ein Befestigungsmittel (4) aus Kunststoff auf den Bund (8) angelegt wird und
**dass** das Befestigungsmittel (4)
wenigstens teilweise auf der Halterung (11) aufliegt, dass das Befestigungsmittel (4) mittels der Kunststoff-Schweißtechnik mit dem Messrohr (10) verbunden wird.

## Claims

1. Electromagnetic flowmeter with a sensor, wherein the sensor comprises
a measuring tube (10) through which a fluid flows,
a magnetic system to generate a magnetic field,
at least one electrode (1) integrated in the measuring tube (10), said electrode being designed to measure an electrical voltage,
wherein a fixing device (4) is provided to fix the electrode (1) on the measuring tube (10),
**characterized in that**
the electrode (1) has a shoulder (8) with which the electrode (1) rests on the measuring tube (10),
**in that** the fixing device (4) rests at least partially on the shoulder (8) of the electrode (1),
**in that** the fixing device (4) is at least partially made of a plastic material,
and **in that** the fixing device (4) is connected to the measuring tube (10) by a plastic welding technology,
wherein, by means of the pressure of the fixing device (4) on the shoulder (8) of the electrode (1), the electrode (1) is pressed into a bore (14) in which the electrode is inserted and placed into a designated position.

2. Unit as claimed in Claim 1,
**characterized in that**
the measuring tube (10) at least partially constitutes a plastic material.

3. Unit as claimed in one of the previous claims,
**characterized in that**
the measuring tube has a bore (14) surrounded by a holder (11),
wherein the electrode (1) is inserted into the bore (14).

4. Unit as claimed in Claim 3,
**characterized in that**
the shoulder (8) of the electrode (1) rests at least partially on the holder (11).

5. Unit as claimed in at least one of the claims 3 or 4,
**characterized in that**
the fixing device (4) is connected to the holder (11).

6. Unit as claimed in one of the previous claims,
**characterized in that**
the plastic welding technology constitutes one of the following technologies: ultrasonic, resistance, stud, laser, electron beam, friction and/or heat welding technology.

7. Unit as claimed in one of the previous claims,
**characterized in that**
the fixing device (4) is designed in such a way that the electrode (1) is arranged in a designated position by the fixing device (4).

8. Unit as claimed in one of the previous claims,
**characterized in that**
the fixing device (4) consists of a cap (4), and **in that** the cap (4) is placed on the holder (11) and accommodates the shoulder (8) of the electrode (1).

9. Unit as claimed in the previous claim,
**characterized in that**
the cap (4) is fitted over the shoulder (8) of the electrode (1).

10. Unit as claimed in one of the previous claims,
**characterized in that**
the electrode (1) has at least one sealing element (3) which seals the measuring tube (10) in the area of the bore (14).

11. Unit as claimed in Claim 10,
**characterized in that**
the electrode (1) has an
electrode head and an electrode shaft
and **in that** the sealing element (3) is partially located in a recess (13) of the electrode shaft.

12. Unit as claimed in Claim 10,
**characterized in that**
at least one welding lip (7) and/or a welding seam is provided on the fixing device (4) and/or the measuring tube (10),
wherein the welding lip (7) and/or the welding seam is used to fix the fixing device (4) on the measuring tube (10).

13. Procedure designed to manufacture an electromagnetic flowmeter,
wherein the electromagnetic flowmeter has a measuring tube (10),
wherein the measuring tube (10) has at least one bore (14),
**characterized in that**
a holder (11) is provided on the measuring tube (10),
an electrode (1) with a shoulder (8) is inserted into the ready-made bore (14) in the measuring tube (10) until the shoulder (8) rests on the measuring tube (10) or the holder (11),
**in that** the electrode (1) is kept in a designated position by the holder (11),
**in that** the plastic fixing device (4) is placed on the shoulder (8), wherein the fixing device (4) rests at least partially on the holder (11),
and **in that** the fixing device (4) is connected to the measuring tube (10) by means of a plastic welding technology,
wherein the electrode (1) is pressed into the bore (14) by the pressure of the fixing device (4) on the shoulder (8) of the electrode (1), and placed in a designated position, and
**in that** the electrode (1) is secured on the measuring tube (10) as a result.

14. Procedure as claimed in Claim 13,
**characterized in that**
the measuring tube (10) has a holder (11) via which the electrode (1) is held in a predefined position,
**in that** the electrode (1) has a shoulder (8) which rests on the holder (11),
**in that** a plastic fixing device (4) is placed on the shoulder (8), and
**in that** the fixing device (4) rests at least partially on the holder (11),
**in that** the fixing device (4) is connected to the measuring tube (10) by means of plastic welding technology.

## Revendications

1. Débitmètre magnéto-inductif avec un capteur,
pour lequel le capteur
comprend un tube de mesure (10) pouvant être parcouru par un produit, comprend un système magnétique pour la création d'un champ magnétique, comporte au moins une électrode (1) logée dans le tube de mesure (10), laquelle électrode est destinée à mesurer une tension électrique,
pour lequel est prévu un moyen de fixation (4) servant à la fixation de l'électrode (1) sur le tube de mesure (10),
**caractérisé**
**en ce que** l'électrode (1) présente un épaulement (8), avec lequel l'électrode (1) repose sur le tube de mesure (10),
**en ce que** le moyen de fixation (4) repose au moins partiellement sur l'épaulement (8) de l'électrode (1),
**en ce que** le moyen de fixation (4) est constitué au moins partiellement d'une matière plastique,
et **en ce que** le moyen de fixation (4) est relié avec le tube de mesure (10) par une technique de soudage des matières plastiques,
pour lequel l'électrode (1) est pressée par la pression du moyen de fixation (4) sur l'épaulement (8) de l'électrode (1) dans un alésage (14), dans lequel est insérée l'électrode (1), et placée dans une position prévue.

2. Dispositif selon la revendication 1,
**caractérisé**
**en ce que** le tube de mesure (2) est constitué au moins partiellement d'une matière plastique.

3. Dispositif selon l'une des revendications précédentes,
**caractérisé**
**en ce que** le tube de mesure présente un alésage (14) entouré par un support (11),
pour lequel l'électrode (1) est insérée dans l'alésage (14).

4. Dispositif selon la revendication 3,
**caractérisé**
**en ce que** l'épaulement (8) de l'électrode (1) repose au moins partiellement sur le support (11).

5. Dispositif selon au moins l'une des revendications 3 ou 4,
**caractérisé**
**en ce que** le moyen de fixation (4) est relié avec le support (11).

6. Dispositif selon l'une des revendications précédentes,
**caractérisé**
**en ce que**, concernant la technique de soudage des matières plastiques, il s'agit d'une des techniques suivantes : technique de soudage par ultrasons, par résistance, à l'arc avec percussion, au laser, par bombardement électronique, par friction et/ou au fil chaud.

7. Dispositif selon l'une des revendications précédentes,
**caractérisé**
**en ce que** le moyen de fixation (4) est conçu de telle sorte que l'électrode (1) soit disposée dans sa position prévue par le moyen de fixation (4).

8. Dispositif selon l'une des revendications précédentes,
**caractérisé**
**en ce que** le moyen de fixation (4) est constitué d'un chapeau (4), et en ce que le chapeau (4) est posé sur le support (11) et épouse l'épaulement (8) de l'électrode (1).

9. Dispositif selon la revendication précédente,
**caractérisé**
**en ce que** le chapeau (4) est placé sur l'épaulement (8) de l'électrode (1).

10. Dispositif selon l'une des revendications précédentes,
**caractérisé**
**en ce que** l'électrode (1) présente au moins un élément d'étanchéité, qui assure l'étanchéité du tube de mesure (10) dans la zone de l'alésage (14).

11. Dispositif selon la revendication 10,
**caractérisé**
**en ce que** l'électrode (1) présente
une tête d'électrode et une tige d'électrode
et **en ce que** l'élément d'étanchéité (3) est logé partiellement dans un évidement (13) de la tige d'électrode.

12. Dispositif selon la revendication 10,
**caractérisé**
**en ce que** sont prévus au moins un bourrelet de soudage (7) et/ou un cordon d'écrasement sur le moyen de fixation (4) et/ou le tube de mesure (10),
le bourrelet de soudage (7) et/ou le cordon d'écrasement servant à fixer le moyen de fixation (4) sur le tube de mesure (10).

13. Procédé destiné à la fabrication
d'un débitmètre magnéto-inductif,
pour lequel le débitmètre magnéto-inductif comprend un tube de mesure (10), pour lequel le tube de mesure (10) comporte au moins un alésage (14),
**caractérisé**
**en ce qu'**est prévu un support (11) sur le tube de mesure (10),
**en ce qu'**est mise en place une électrode (1) pourvue d'un épaulement (8) dans l'alésage (14) préusiné du tube de mesure (10), jusqu'à ce que l'épaulement (8) repose sur le tube de mesure (10) ou sur le support (11),
**en ce que** l'électrode (1) est maintenue dans une position prévue au moyen du support (11),
**en ce qu'**un moyen de fixation (4) en matière plastique est placé sur l'épaulement (8), le moyen de fixation (4) reposant au moins partiellement sur le support (11), et en ce que le moyen de fixation (4) est relié avec le tube de mesure (10) au moyen d'une technique de soudage des matières plastiques,
pour lequel l'électrode (1) est pressée par la pression du moyen de fixation (4) sur l'épaulement (8) de l'électrode (1) dans l'alésage (14), et placée dans une position prévue, et
**en ce que** l'électrode (1) est fixée par ce biais sur le tube de mesure (10).

14. Procédé selon la revendication 13,
**caractérisé**
**en ce que** le tube de mesure (10) comporte un support (11), à travers lequel l'électrode (1) est maintenue dans une position prévue,
**en ce que** l'électrode présente un épaulement (8), qui repose sur le support (11), en ce qu'un moyen de fixation (4) en matière plastique est placé sur l'épaulement (8) et
**en ce que** le moyen de fixation (4) repose au moins partiellement sur le support (11),
**en ce que** le moyen de fixation (4) est relié avec le tube de mesure (10) au moyen de la technique de soudage des matières plastiques.
